# EUROPEAN PATENT APPLICATION

(11) **EP 2 838 063 A1**
(43) Date of publication of application: **18.02.2015**
(21) Application number: 14180882.4
(22) Date of filing: 13.08.2014
(51) Int. Cl.: G06Q 30/02

(54) **DEVICE AND METHOD FOR CALCULATING ADVERTISING EXPENSE IN MULTI-SCREEN SERVICE SYSTEM**

(30) Priority: 16.08.2013 KR 20130096998
(71) Applicant: Samsung Electronics Co., Ltd, Gyeonggi-do 443-742 (KR)
(72) Inventor: Oh, Yangkyun, 443-742 Gyeonggi-do (KR); Park, Jin, 443-742 Gyeonggi-do (KR)
(74) Representative: Nederlandsch Octrooibureau

(57) **Abstract**

A method for calculating an advertisement expense for a multi-screen system comprising a host terminal and at least one sharer terminal includes obtaining device information on the host terminal and the at least one sharer terminal, determining each calculation method for advertisement expenses for the host terminal and the at least one sharer terminal, based on device information, and calculating each advertisement expense for the host terminal and at least one sharer terminal, according to the respective calculation method, and obtaining a total advertisement expense for the multi-screen system by summing up each advertisement expense. Other embodiments including a method for processing advertising expenses at a host terminal and a server for calculating an advertisement expenses for a multi-screen system are also disclosed.

## Description

### TECHNICAL FIELD

The present disclosure relates to technology for calculation of advertising expenses in a content service system. More particularly, embodiments of the present disclosure relate to a device and method for calculating advertising expenses in an environment of providing a multi-screen service.

### BACKGROUND

Normally a multi-screen service may store meta information of contents used by a terminal in a cloud server or the like, allowing another terminal to download such meta information from the server and then request the same content from a content server. In this case, the other terminal has to newly download an advertisement contained in the content from a separate advertisement providing server.

A typical technique to realize a multi-screen service is based on condition that a central server is essential for a connection between devices and for transmission or sharing of contents. Although a device-to-device sharing scenario is possible without engaging a central server, this scenario has been not considered for a system for offering an advertisement and calculating advertising expenses. For example, a user who watches multimedia content containing an advertisement on a personal terminal such as a smart phone or tablet PC may connect the personal terminal to any other device having a larger display such as a smart TV through an HDMI connect such that many users (e.g., a family, friends, broadcast viewers, etc.) can watch together the same content. Further, it is possible for a user to share the same content with other users by connecting his or her personal terminal to sharers' terminals through Wi-Fi™ or the like. In this case, although an advertisement is exposed to many users, it is impossible to impose advertising expenses in relation to such users.

### SUMMARY

A method for calculating an advertisement expense for a multi-screen syste m comprising a host terminal and at least one sharer terminal includes obtaining device inf ormation on the host terminal and the at least one sharer terminal, determining each calcula tion method for advertisement expenses for the host terminal and the at least one sharer ter minal, based on device information, and calculating each advertisement expense for the ho st terminal and at least one sharer terminal, according to the respective calculation method, and obtaining a total advertisement expense for the multi-screen system by summing up ea ch advertisement expense.

In some embodiments, the device information contains display sizes, and w herein each calculation method depends on respective display size.

In some embodiments, the calculating the advertising expenses comprises c alculating the advertising expenses for the host terminal, based on exposure times and an e xposure duration of the advertisement, and a number of clicking the advertisement.

In some embodiments, the calculating the advertising expenses includes cal culating the advertising expenses for the at least one sharer terminal, based on exposure ti mes of the advertisement and the exposure duration of the advertisement.

In some embodiments, the exposure duration of the advertisement on the sh arer terminal is a difference between a link connection time and a link disconnection time o f the advertisement at the sharer terminal.

A method for processing advertising expenses at a host terminal of a system that provides a multi-screen service, the method comprising receiving the advertisement fr om the server, and requesting device information regarding a sharer terminal when the shar er terminal is connected to the host terminal, obtaining device information of the sharer ter minal, and transmitting device information regarding the host terminal and the sharer termi nal to the server; transmitting the advertisement to the sharer terminal, and upon a request f or finishing a display of the advertisement, delivering the request to the server.

In some embodiments, the device information contains display sizes of the host terminal and the sharer terminal, and wherein the server determines the calculation me thods of advertisement expenses, depending on the respective display size.

In some embodiments, the method further includes, upon a request for disco nnecting the sharer terminal, transmitting an instruction of disconnecting the sharer termin al, to the server.

In some embodiments, the method further includes, based on a click on the displayed advertisement, transmitting information on a number of clicking the advertiseme nt to the server.

A server for calculating an advertisement expenses for a multi-screen syste m comprising a host terminal and at least one sharer terminal, includes a communication u nit configured to receive device information on the host terminal and the at least one sharer terminal, from a host terminal, and transmit an advertisement to the host terminal, a proce ssor configured to determine calculation methods for each advertisement expense of the ho st terminal and the at least one sharer terminal, based on device information on the respecti ve terminal, and calculate each advertisement expense for the host terminal and at least one sharer terminal, according to the respective calculation method, and obtain a total advertis ement expense for the multi-screen system by summing up each advertisement expense.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a block diagram illustrating an advertising system that provides a multi-screen environment in accordance with embodiments of the present disclosure.
FIG. 2 is a block diagram illustrating an advertising server that offers an advertisement to a terminal and calculates advertising expenses by analyzing information received from the terminal in accordance with embodiments of the present disclosure.
FIG. 3 is a block diagram illustrating a terminal that transmits information to an advertising server and receives an advertisement from the advertising server in accordance with embodiments of the present disclosure.
FIG. 4 is a flow diagram illustrating a process of calculating advertising expenses in a system that provides a multi-screen environment in accordance with embodiments of the present disclosure.
FIG. 5 is a flow diagram illustrating an operating process of a terminal in the system as shown in FIG. 4 in accordance with embodiments of the present disclosure.
FIG. 6 is a flow diagram illustrating an operating process of an advertising server in the system as shown in FIG. 4 in accordance with embodiments of the present disclosure.
FIG. 7 is a flow diagram illustrating a process of calculating advertising expenses in a system that includes a content server for providing content together with an advertisement in accordance with embodiments of the present disclosure.

### DETAILED DESCRIPTION

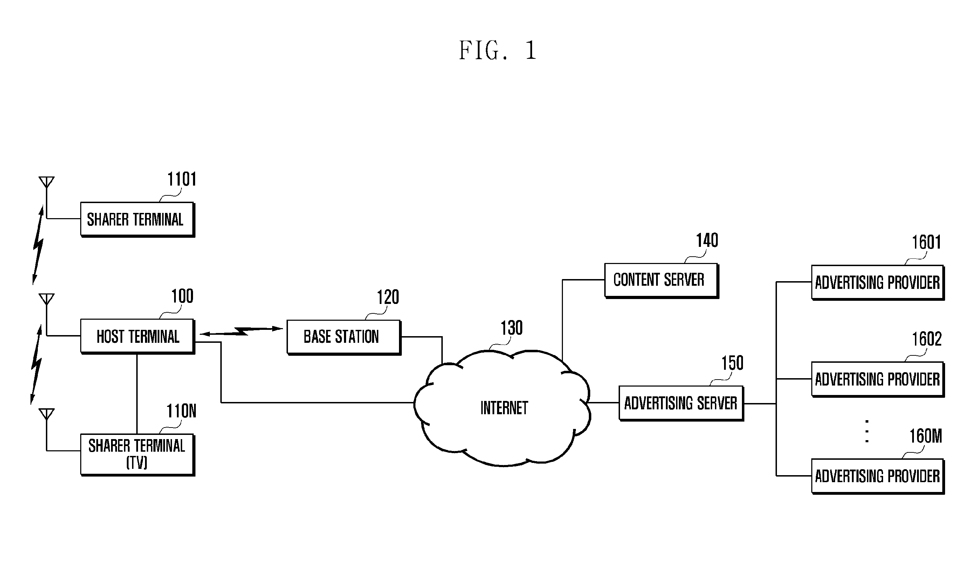

FIGURES 1 through 7, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged telecommunication technologies. The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "an advertisement" includes reference to one or more of such advertisements.

With smart devices such as a smart phone, a tablet PC, etc. popularized in these days, a multimedia contents market has been also invigorated and thus a service for offering advertisements has grown to create profits of market participants such as contents providers and service platform providers. Additionally, a multi-screen environment for sharing multimedia contents with a plurality of smart devices or offering a simultaneous game play function has attracted users' attention. For example, what is called N-screen provides a service for allowing many devices to simultaneously use the same content through a network.

Meanwhile, a unit price and expenses of an advertisement is set differently depending on the characteristics (e.g., a display size, location, etc.) of a channel through which such an advertisement is offered. Namely, a large-sized display of device can result in higher advertising expenses. If advertising expenses for a smart phone is 100 for example, advertising expenses for a large-screen device such as a TV can be set between 150 and 200 in general. Furthermore, if an electronic device displaying an advertisement is installed at a place crowded with people (e.g., at a large-scale shop, public square, or any other outdoor place), advertising expenses can be set higher in comparison with other electronic device installed at a normal place. Therefore, in case a multi-screen service such as N-screen is provided on the basis of a device-to-device connection without relying upon a central server, if a terminal instead of a central server offers the characteristics of an advertising channel to an advertising service provider, the advertising service provider can set additional advertising expenses according to such characteristics. Additionally, the advertising service provider can reward a user of a host terminal (i.e., a start point of a device-to-device connection) for contributing to an additional exposure of an advertisement.

FIG. 1 is a block diagram illustrating an advertising system that provides a multi-screen environment in accordance with embodiments of the present disclosure.

Referring to FIG. 1, the advertising system that provides a multi-screen environment includes a content server 140 for offering contents and an advertising server 150 for offering an advertisement and calculating advertising expenses by using information received from a terminal. Additionally, the advertising system can include one or more advertising providers 1601 to 160M for providing an advertisement to the advertising server 150. Also, the advertising system can include a host terminal 100 that performs a multi-screen service, and one or more sharer terminals 1101 to 110N that can be connected to the host terminal 100 through a device-to-device connection.

The content server 140 offers contents to the host terminal 100 and the sharer terminals 1101 to 110N. In this disclosure, contents can include multimedia data such as music, movie, or the like and any other various data such as game, e-book, or the like.

The advertising server 150 offers an advertisement to the host terminal 100 and/or the sharer terminals 1101 to 110N by interworking with the content server 140, and calculates advertising expenses by using information received from the host terminal 100. Particularly, the advertising server 150 transmits an advertisement to the host terminal 100 in response to a request of the host terminal 100. At this time, an advertisement can be selected among advertisements provided by the advertising providers 1601 to 160M. Additionally, a specific advertisement can be selected depending on the characteristics of the host terminal 100.

Each of the advertising providers 1601 to 160M offers an advertisement to be displayed on the host terminal 100 and/or the sharer terminals 1101 to 110N to the advertising server 150. The advertising providers 1601 to 160M can be realized as a server in an advertising agency. The single advertising server 150 can receive advertisements from the plurality of advertising providers 1601 to 160M interworked therewith.

The host terminal 100 can establish a communication link with the content server 140 and the advertising server 150 through a base station 120 or an internet 130. Each of the sharer terminals 1101 to 110N can establish a wired or wireless communication link with the host terminal 100 by means of a device-to-device connection. Each of the host terminal 100 and the sharer terminals 1101 to 110N can be a portable electronic device having a wireless communication unit, such as a mobile phone, a smart phone, a tablet PC, and a laptop computer, or alternatively any other electronic device such as a desktop computer and a TV. In this embodiment, it is supposed that the host terminal 100 is a portable electronic device adapted for GSM (Global System for Mobile communication), UMTS (Universal Mobile Telecommunications System), CDMA (Code Division Multiple Access), LTE (Long Term Evolution), or LTE-A (LTE-Advanced). The host terminal 100 can support a short-range wireless communication such as Wi-Fi, Bluetooth, and/or NFC (Near Field Communication), and also support a wired communication such as HDMI (High Definition Multimedia Interface) and/or USB (Universal Serial Bus). As an example, the sharer terminal 1101 can be a tablet PC and the sharer terminal 110N can be a TV.

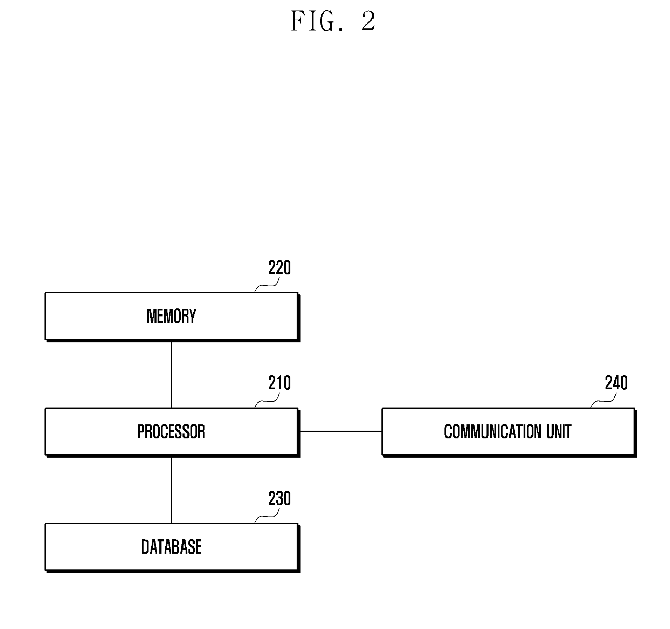

FIG. 2 is a block diagram illustrating an advertising server that offers an advertisement to a terminal and calculates advertising expenses by analyzing information received from the terminal in accordance with embodiments of the present disclosure.

Referring to FIG. 2, the advertising server includes a processor 210, a memory 220, a database 230, and a communication unit 240.

The memory 220 stores therein the operating program of the advertising server. This operating program can offer an advertisement in response to a request of the terminal and can perform a function to analyze information received from the terminal and thereby to calculate advertising expenses.

The processor 210 controls the operation of the advertising server by means of the program stored in the memory 220. Under the control of the processor 210, the communication unit 240 transmits an advertisement to the terminal and receives device information from the terminal. The database 230 stores therein data used for calculating advertising expenses according to information received from the terminal, and can also store herein advertising expenses calculated depending on an advertisement transmitted to the terminal together with any content. Namely, under the control of the processor 210, the database 230 stores therein advertisement data (e.g., log information) associated with an advertisement offered to the terminals and can also store therein the advertising expenses calculated at a specific time point.

Now, the operation of this advertising server 150 will be described in detail. At the outset, under the control of the processor 210, the communication unit 240 receives device information from the host terminal 100 and also transmits an advertisement to the host terminal 100. The memory 220 can store therein an operating program of the advertising server and the calculation method (i.e., criteria) of advertising expenses based on device information of the terminals. The calculation method of advertising expenses can be set in advance before an advertisement is offered (for example, at the time of a transaction or contract between an advertiser and an advertising service provider). Further, the calculation method of advertising expenses can be updated after an advertisement is offered. The processor 210 not only determines the calculation criteria of advertising expenses for respective terminals by analyzing device information of the host terminal 100 and the sharer terminals 1101 to 110N, received through the communication unit 240, but also obtains advertising expenses by calculating and adding up individual advertising expenses for the host terminal 100 and at least one of the sharer terminal 1101 to 110N on the basis of corresponding calculation criteria at the time of calculating advertising expenses. This calculation time of advertising expenses can be determined by the advertising server from among arbitrary time points after an advertisement is offered. Namely, the calculation time of advertising expenses can be a time point of finishing transmission of an advertisement, a specific time point predefined by the server (e.g., a daily specific time, a weekly specific time, a monthly specific time, etc.), or a specific time point based on a contract with an advertiser (e.g., a date of settling up advertising expenses with an advertiser, the expiration date of a contract with an advertiser, etc.). In some embodiments, the advertising server can calculate the advertising expenses at the time point of finishing transmission of an advertisement to the terminal. Meanwhile, the processor 210 can store the calculated advertising expenses in the database 230, especially, at a specific location corresponding to the host terminal 100.

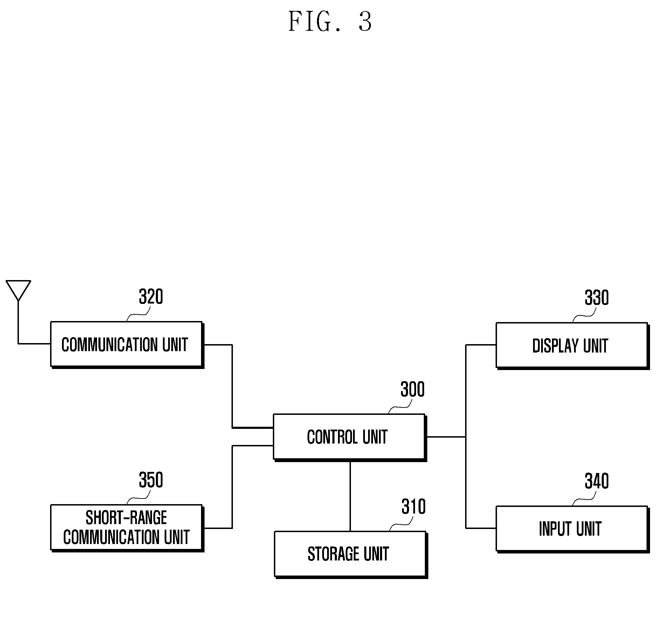

FIG. 3 is a block diagram illustrating a terminal that transmits information to an advertising server and receives an advertisement from the advertising server in accordance with embodiments of the present disclosure.

Referring to FIG. 3, the terminal, corresponding to the above-discussed the host terminal 100 or each of the sharer terminals 1101 to 110N, includes a control unit 300, a storage unit 310, a communication unit 320, a display unit 330, an input unit 340, and a short-range communication unit 350.

The communication unit 320 performs a wireless communication function with a base station, an internet server, or the like. The communication unit 320 can include a transmitter that up-converts the frequency of an outgoing signal and amplifies the signal, a receiver that amplifies with low-noise an incoming signal and down-converts the frequency of the signal, and the like. Also, the communication unit 320 can include a modulator and a demodulator. The modulator modulates an outgoing signal and transmits the modulated signal to the transmitter, and the demodulator receives an incoming signal from the receiver and demodulates the received signal. These modulator and demodulator can be designed to selectively conform to LTE, WCDMA, GSM, or the like.

The short-range communication unit (e.g., a transceiver) 350 is connected to an adjacent terminal and performs a data communication with the connected terminal. Also, the short-range communication unit 350 can perform a wireless communication function based on Wi-Fi, Wibro, NFC, Bluetooth, or the like, and/or a wired communication function based on HDMI, USB, or the like.

The control unit 300 controls the overall operations of the terminal. When a content application is triggered, the control unit 300 requests content from the content server 140 and an advertisement from the advertising server 150. Further, when a connection with any other terminal is detected through the short-range communication unit 350, the control unit 300 transmits device information of the connected terminal to the advertising server 150 such that advertising expenses can be calculated.

The storage unit 310 can include a program memory and a data memory. The program memory stores an operating program of the terminal and other programs associated with various embodiments of this disclosure. The data memory stores tables required for the operation of the terminal and data created during the execution of programs.

The display unit 330 displays running content and an advertisement under the control of the control unit 300. The display unit 330 can include a LCD, OLED, or any other equivalent display. The input unit 340 can be formed of a capacitive type or resistive type, and outputs information about a user's touch position to the control unit 300. Also, the input unit 340 can further have an EMR sensor pad that detects a pen touch input and then outputs a detection signal to the control unit 300. The display unit 330 and the input unit 340 can be assembled in an integrated form.

Additionally, although not shown, the terminal can further include an audio processing unit for processing an audio signal created in a communication mode under the control of the control unit 300, and sensors for detecting the movement of the terminal. The sensors can be formed of an acceleration sensor, a geomagnetic sensor, and/or any other position detecting sensor.

The host terminal 100 can have configuration as shown in FIG. 3. Also, the sharer terminal 1101 can be a terminal (e.g., a smart phone, a tablet PC, etc.) as shown in FIG. 3. The sharer terminal 110N can be a TV. The host terminal 100 can be connected to the sharer terminals 1101 and 110N through the short-range communication unit 350 by means of a device-to-device connection. In this case, the host terminal 100 can be connected to the sharer terminal 1101 by means of Wi-Fi Direct technique and to the sharer terminal 110N by means of HDMI technique.

The host terminal 100 can request an offer of content from the content server 140 and transmission of an advertisement from the advertising server 150 through the communication unit 120. Then the host terminal 100 can receive content and an advertisement from the content server 140 and the advertising server 150, respectively, and display them on the display unit 330. If the sharer terminal 1101 is connected through a wireless network (e.g., Wi-Fi Direct) or the sharer terminal 110N is connected through a wired cable (e.g., HDMI) while content and an advertisement are displayed, the host terminal 100 analyzes device information of the connected sharer terminal 1101 or 110N and then transmits it to the advertising server 150 through the communication unit 320. Here, device information can contain a device type of the terminal (e.g., a smart phone, a tablet PC, a TV, etc.), a display size of the terminal (i.e., a screen size), location information of the terminal, and the like.

Then the advertising server 150 analyzes device information received from the host terminal 100 and determines an advertising calculation rate according to the duration of connection of the terminal, the type of the connected terminal, and a display size of the connected terminal. Additionally, the host terminal 100 transmits content and an advertisement, received from the content server 140 and the advertising server 150, to the sharer terminal(s) 1101 and/or 110N through the short-range communication unit 250. At this time, the advertising server 150 can be aware that an advertisement offered to the host terminal 100 is also offered to the connected sharer terminal(s) 1101 and/or 110N. Therefore, the advertising server 150 can calculate advertising expenses in consideration of the connected sharer terminals and can further earmark a reward for an action of the host terminal.

The advertising server 150 can calculate advertising expenses on the basis of the host terminal 100 that actually receives an advertisement. Advertising expenses can be calculated depending on the exposure frequency of an advertisement, the exposure duration of an advertisement, the click frequency of an advertisement, and the like. Further, in various embodiments, when it is detected that an advertisement is offered to the host terminal 100 and any other terminal connected thereto, the advertising server 150 can calculate and add up individual advertising expenses based on unit prices of advertisement for respective terminals determined according to characteristics (e.g., the type of a terminal, a screen size of a terminal, etc.) of terminals.

As discussed above, the calculation criteria of advertising expenses can be set in advance, for example, at the time of a transaction or contract between an advertiser and an advertising service provider, and can also be updated after an advertisement is offered. At the time of offering an advertisement, the advertising server 150 can store, as a log, a record of offering an advertisement in database thereof. Then, at the time of calculating advertising expenses, the advertising server 150 can refer to such a log stored in the database and calculate advertising expenses by using the calculation criteria. This calculation of advertising expenses can be performed at a specific time point such as a time point when transmission of an advertisement is finished, or a predefined time point after transmission of an advertisement (e.g., a daily specific time, a weekly specific time, a monthly specific time, a date of settling up advertising expenses with an advertiser, etc.). In case an advertisement depends on a terminal display size, the advertising server 150 can transmit a selected advertisement depending on the display size of the connected terminal. Namely, if an advertisement displayed on a portable device is different from that displayed on a TV, the advertising server 100 can transmit a suitable advertisement for the display size of the connected terminal. Similarly, the host terminal 100 can transmit the same advertisement or different advertisements to the sharer terminals 1101 and 110N.

Alternatively, an advertisement can be offered by the content server 140, together with content. In this case, the host terminal 100 can not perform an operation of requesting an advertisement. Therefore, the host terminal 100 merely receives contents and advertisements from the content server 140 and displays them thereon. If the sharer terminal(s) 1101 and/or 110N are/is connected, the host terminal 100 transmits device information about the connected terminal to the content server 140. Then the content server 140 can calculate advertising expenses in the same manner as the advertising server 150.

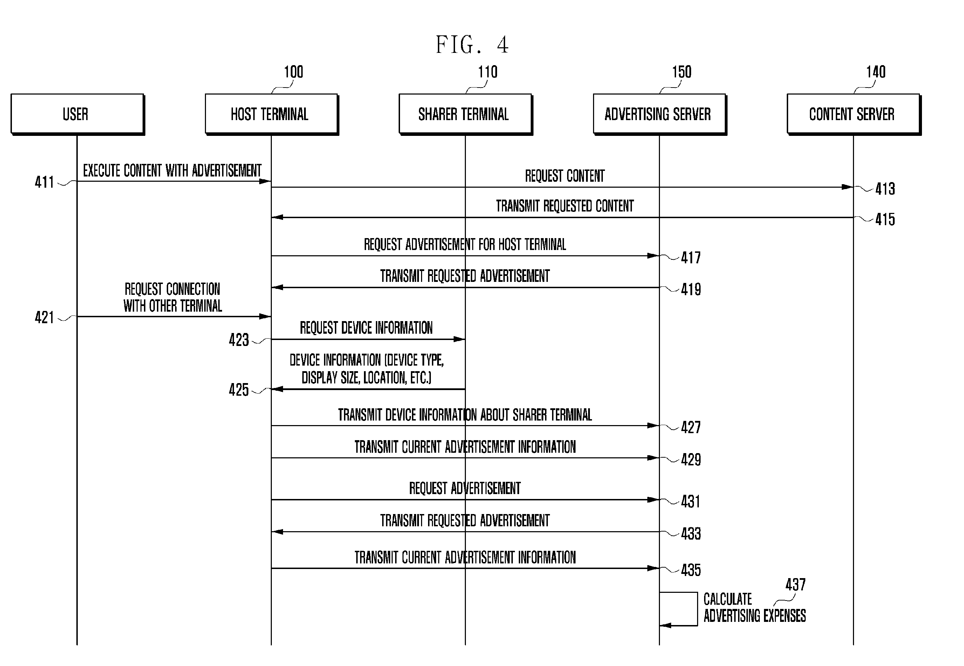

FIG. 4 is a flow diagram illustrating a process of calculating advertising expenses in a system that provides a multi-screen environment in accordance with embodiments of the present disclosure. FIG. 4 shows an example of independently operating the content server 140 and the advertising server 150.

Referring to FIG. 4, the control unit 300 of the host terminal 100 detects a user's request for executing specific content containing an advertisement through the input unit 340 at operation 411, and sends a request for an offer of the requested content to the content sever 140 through the communication unit 320 at operation 413. Then, at operation 415, the content server 140 transmits the requested content to the host terminal 100, the control unit 300 of which controls the display unit 330 to display thereon the requested and received content. Further, at operation 417, the control unit 300 of the host terminal 100 transmits device information of the host terminal 100 to the advertising server 150 and requests an offer of an advertisement. At this operation, device information can contain a device type of the terminal, a display size of the terminal, a location of the terminal, and the like. Then, at operation 419, the advertising server 150 transmits an advertisement to the host terminal 100, the control unit 300 of which controls the display unit 330 to display thereon the received advertisement together with content.

While an advertisement and content are displayed together, the control unit 300 of the host terminal 100 detects at operation 421 a request for a connection with other terminal (i.e., the sharer terminal 110 with which a user of the host terminal desires to share contents and advertisements). Alternatively, a connection with the sharer terminal can be detected when a communication link (e.g., Wi-Fi Direct and/or HDMI cable) is established with the sharer terminal 110 through the short-range communication unit 350. When a connection with the sharer terminal 110 is detected, the control unit 300 requests device information of the connected sharer terminal 110 through the short-range communication unit 350 at operation 423, and receives device information from the sharer terminal 110 at operation 425. As discussed above, device information can be a device type, a display size, location information, etc. of the sharer terminal.

After device information about the connected sharer terminal 110 is received, the control unit 300 transmits the received device information to the advertising server 150 through the communication unit 320 at operation 427, and further transmits information about a currently displayed advertisement to the advertising server 150 through the communication unit 320 at operation 429. Then the advertising server 150 analyzes device information received from the host terminal 100 and determines conditions for calculating advertising expenses for the sharer terminal 110. Thereafter, when the control unit 300 of the host terminal 100 requests an offer of an advertisement at operation 431, the advertising server 150 transmits an advertisement to the host terminal 100 at operation 433. At this operation, the offered advertisement can be a banner image, or the like. Next, the control unit 300 of the host terminal 100 transmits information about the offered advertisement to the advertising server 150 at operation 435.

The advertising server 150 that offers an advertisement to the host terminal 100 calculates and adds up individual advertising expenses for the host terminal 100 at operation 437. At this operation, the advertising server 150 can be aware that there is at least one sharer terminal 110 connected to the host terminal 100 and also an advertisement is being displayed on two or more terminals, namely, the host terminal 100 and at least one connected sharer terminal 110. In this case, advertising expenses can be calculated individually and differently according to device information of the respective terminals. Therefore, at operation 437, the advertising server 150 can calculate and add up individual advertising expenses for each of the host terminal 100 and the connected sharer terminal(s) 110.

Specifically, the advertising server 150 can calculate individually and differently advertising expenses according to a display size and/or a location of the terminal. Namely, the calculation criteria of advertising expenses for an electronic device having a large-sized screen can be set relatively higher in comparison with any small-sized electronic device. Also, a case of displaying an advertisement at a specific location (e.g., a shopping mall, a department store, a market, an exhibition room, etc.) can have advertising expenses of a special unit price determined higher in comparison with any other location. For example, in case an advertisement is displayed on a large-sized TV or screen installed at a large-scale shop, public square, or any other outdoor place, a special unit price (e.g., discussed with an advertiser) can be applied to calculation of advertising expenses. Therefore, an advertising service system in embodiments of this disclosure can be operated for special benefit of owners or operators of electronic devices according to their installed locations and/or screen sizes.

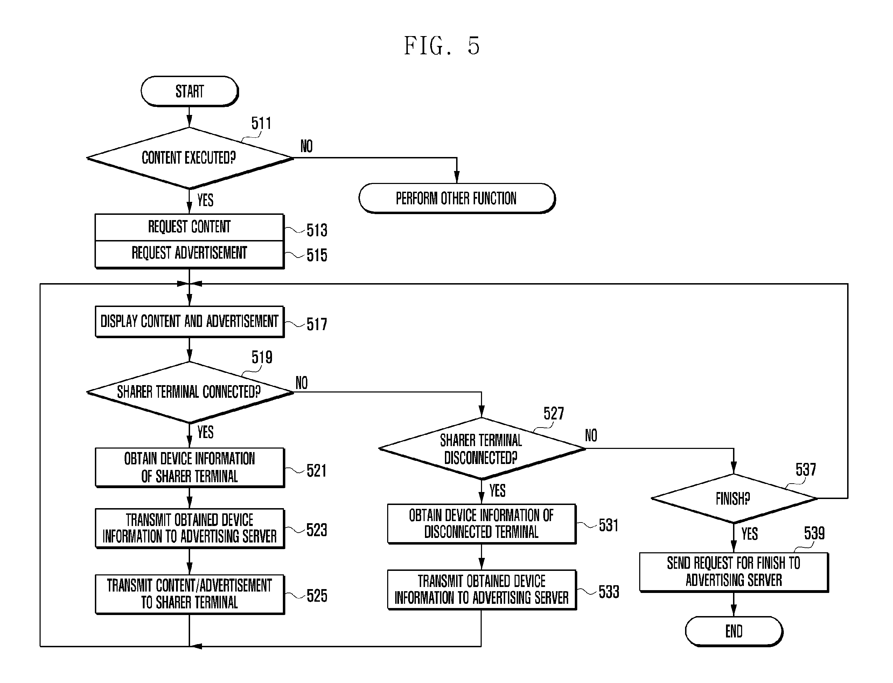

FIG. 5 is a flow diagram illustrating an operating process of a terminal in the system as shown in FIG. 4 in accordance with embodiments of the present disclosure.

Referring to FIG. 5, at operation 511, the control unit 300 detects a request for executing an application of content containing an advertisement through the input unit 340. Then the control unit 300 requests an offer of content from the content server 140 through the communication unit 320 at operation 513 and also requests an offer of an advertisement from the advertising server 150 by transmitting device information of the host terminal 100 through the communication unit 320 at operation 515. Here, device information can be a device type, a display size, location information, etc. of the host terminal 100. This device information can be used for the advertising server 150 that calculates advertising expenses for the host terminal 100. Thereafter, at operation 517, the control unit 300 receives content and an advertisement from the control server 140 and the advertising server 150, respectively, and then displays them on the display unit 330.

While content is displayed together with an advertisement, the host terminal 100 can be connected to adjacent sharer terminals and share a currently running application with the connected sharer terminals. As a representative technique to share contents at two or more terminals, an N-screen service is well known in the art. The N-screen service is a computing and networking service that has the ability to share the same content at various digital electronic devices such as a smart phone, a tablet PC, a PC, a smart TV, a car, and the like. This service allows continuously watching the same content at any time at any place regardless of time, location, and type of device. For example, a user who obtains desired content downloaded through a computer and watches the downloaded content on a TV can continuously watch the same content on a smart phone or a tablet PC at any other place. In the N-screen service, a communication networking between terminals can be performed using a short-range wireless communication such as Wi-Fi, Bluetooth, or NFC and/or a wired communication using an HDMI cable or the like. Therefore, the short-range communication unit 350 can have the configuration adapted to support both a short-range wireless communication and a wired communication. In an embodiment of this disclosure, the control unit 300 can form a communication networking with adjacent terminals through the short-range communication unit 350, based on a wireless communication of Wi-Fi Direct technique and/or a wired communication using an HDMI cable.

At operation 519, the host terminal 100 checks whether a connection with any adjacent terminal is made in a content advertising service. This connection with an adjacent terminal can be performed in response to a request from the host terminal 100 to the sharer terminal(s) 1101 to 110N and vice versa. If such a request is detected, the control unit 300 establishes a communication link with the sharer terminal(s) through the short-range communication unit 350 at operation 519 and then obtains device information about the connected sharer terminal(s) by requesting transmission of device information from the sharer terminal(s) at operation 521. Additionally, the control unit 300 transmits the obtained device information to the advertising server 150 at operation 523. Then the advertising server 150 detects the existence of the sharer terminal(s) connected to the host terminal 100, analyzes the received device information about the connected sharer terminal(s), and resets the calculation criteria of advertising expenses. At operation 525, the control unit 300 requests an offer of an advertisement from the advertising server 150, displays the received content and advertisement on the display unit 330, and also transmits them to the sharer terminal(s) through the short-range communication unit 350.

Thereafter, at operation 517, the control unit 300 performs a service in which the host terminal 100 is connected to the sharer terminal(s) and shares contents and advertisements with the connected sharer terminal(s). Meanwhile, in this state, the sharer terminal(s) can be disconnected. If there is a request for a disconnection of the sharer terminal(s), the control unit 300 can detect such a request at operation 527. Then, at operation 531, the control unit 300 obtains device information about the disconnection-requested sharer terminal and removes a connection with the requested sharer terminal by controlling the short-range communication unit 350. Further, at operation 533, the control unit 300 transmits device information about the disconnected sharer terminal to the advertising server 150. Then the advertising server 150 detects the disconnection of the sharer terminal from the host terminal 100, analyzes the received device information about the disconnected sharer terminal, and resets the calculation criteria of advertising expenses.

As discussed above, the host terminal 100 can perform a connection with or disconnection from any sharer terminal while a particular application is running with contents and advertisements being displayed. At the time of such a connection or disconnection, the host terminal 100 transmits device information about connected or disconnected terminal(s) to the advertising server 150 such that the advertising server 150 can reset the calculation criteria of advertising expenses at that time. Meanwhile, if there is a request for finishing a current service, the control unit 300 detects this request at operation 537 and then transmits device information about the host terminal 100 to the advertising server 150 at operation 539. Therefore, a content and advertisement service is ended.

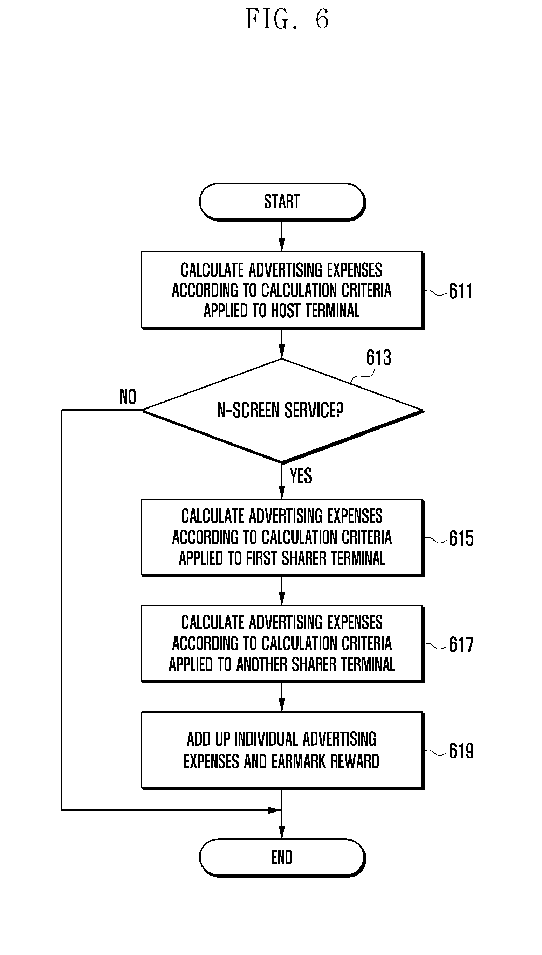

FIG. 6 is a flow diagram illustrating an operating process of an advertising server in the system as shown in FIG. 4 in accordance with embodiments of the present disclosure.

Referring to FIG. 6, when transmitting an advertisement to the host terminal 100, the advertising server 150 receives device information about the host terminal 100 and sets the calculation criteria of advertising expenses for the host terminal 100. Further, the advertising server 150 checks the duration of watching an advertisement and information about selecting an advertisement and then accumulates them. Additionally, if a connection with the sharer terminal is detected from the host terminal 100, the advertising server 150 obtains device information about the sharer terminal, analyzes the obtained device information, and sets the calculation criteria of advertising expenses. Further, the advertising server 150 accumulates the duration of watching an advertisement by the sharer terminal. This accumulation is continued until the deactivation of the host terminal 100 is detected or information about the disconnection (i.e., the removal of a communication link) of the sharer terminal is received from the host terminal 100.

Device information about the host terminal 100 or each of the sharer terminals 1101 to 110N can contain a device type of the terminal (e.g., a smart phone, a tablet PC, a laptop computer, a desktop computer, a TV, etc.), a display size of the terminal (i.e., a screen size), location information of the terminal, and the like. The advertising server 150 can set differently the calculation criteria of advertising expenses, depending on a device type, a display size, a device location, and the like. For example, contrary to a portable device such as a smart phone personally used in general, a TV watched usually by people can be set to pay higher advertising expenses. Also, a device having a large-sized display (e.g., a large-sized TV, a multi-screen device, etc.) can be set to pay higher advertising expenses. And also, a device placed at a crowded location (e.g., a station, a bus stop, a stadium, etc.) can be set to pay higher advertising expenses.

As discussed above, the advertising server 150 offers an advertisement to the host terminal 100 and sets the criteria of advertising expenses for the host terminal 100 by analyzing device information about the host terminal 100. Additionally, the host terminal 100 transmits device information about the connected sharer terminal to the advertising server 150, and then the advertising server 150 sets the criteria of advertising expenses for the sharer terminal by analyzing device information about the sharer terminal. Also, the host terminal 100 notifies the disconnection of the sharer terminal to the advertising server 150. Meanwhile, when a user of the host terminal 100 clicks a specific advertisement (e.g., an advertising banner) displayed on the display unit 330, the advertising server 150 can accumulate the number of clicks on the advertisement of the host terminal 100 and apply it to advertising expenses. Further, the advertising server 150 can accumulate the duration of connection by the host terminal and sharer terminal(s) while an advertisement is offered.

In such a state, at operation 611, the advertising server 150 calculates advertising expenses for the host terminal 100 according to the calculation criteria applied to the host terminal 100. At this operation, advertising expenses can be calculated depending on the exposure frequency of an advertisement, the exposure duration of an advertisement, the click frequency of an advertisement, and the like. After advertising expenses for the host terminal 100 are calculated, the advertising server 150 determines at operation 613 whether there is a sharer terminal (for example, whether an advertisement is offered by means of a N-screen service). If so, the advertising server 150 calculates advertising expenses for respective sharer terminals at operations 615 and 617. Namely, the advertising server 150 calculates at operation 615 advertising expenses for the first sharer terminal by checking the exposure frequency and exposure duration of an advertisement on the basis of the calculation criteria applied to the first sharer terminal. Similarly, the advertising server 150 calculates at operation 617 advertising expenses for another sharer terminal. For example, if three sharer terminals share specific content and watch an embedded advertisement, the advertising server 150 calculates three times individual advertising expenses for such sharer terminals. Then, at operation 619, the advertising server 150 adds up individual advertising expenses, stores the added advertising expenses in a database location corresponding to the host terminal 100, and earmarks a reward for watching an advertisement.

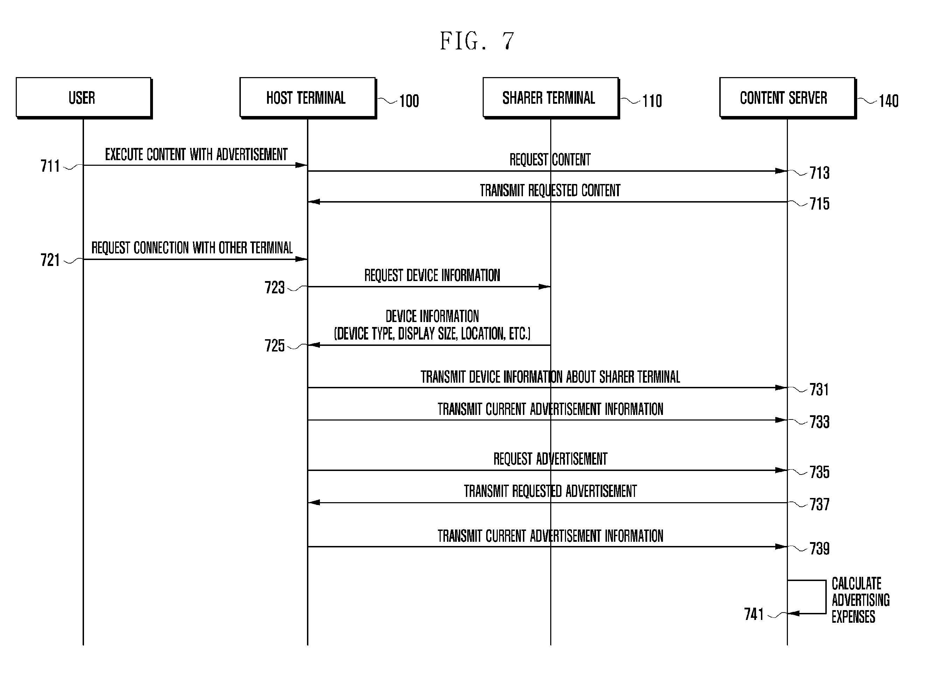

FIGS. 4 to 6 show a method for processing advertising expenses in a system for offering content and advertisement through the content server 140 and the advertising server 150 installed independently. Alternatively, an advertisement can be offered together with content by the content server 140 alone. FIG. 7 is a flow diagram illustrating a process of calculating advertising expenses in a system that includes a content server for providing content together with an advertisement in accordance with embodiments of the present disclosure.

Referring to FIG. 7, the control unit 300 of the host terminal 100 detects a request for executing specific content at operation 711, and sends a request for an offer of the requested content to the content sever 140 through the communication unit 320 at operation 713. Then, at operation 715, the content server 140 transmits the requested content to the host terminal 100, together with an advertisement. Therefore, at this operation, the control unit 300 of the host terminal 100 receives content and an advertisement from the content server 140 and then displays them on the display unit 330.

While an advertisement and content are displayed together, the control unit 300 of the host terminal 100 detects at operation 721 a request for a connection with the sharer terminal 110 and establishes a communication link with the sharer terminal 110. At this operation, a connection with the sharer terminal 110 can be made by a communication link (e.g., Wi-Fi Direct and/or HDMI cable) through the short-range communication unit 350. Thereafter, the control unit 300 requests device information of the connected sharer terminal 110 through the short-range communication unit 350 at operation 723, and receives device information from the sharer terminal 110 at operation 725. As discussed above, device information can be a device type, a display size, location information, etc. of the sharer terminal.

After device information about the connected sharer terminal 110 is received, the control unit 300 transmits the received device information to the content server 140 through the communication unit 320 at operation 731, and further transmits information about a currently displayed advertisement to the content server 140 through the communication unit 320 at operation 733. Then the content server 140 analyzes device information received from the host terminal 100 and sets criteria for calculating advertising expenses for the sharer terminal 110. Thereafter, when the control unit 300 of the host terminal 100 requests an offer of an advertisement at operation 735, the content server 140 transmits an advertisement to the host terminal 100 at operation 737. At this operation, the offered advertisement can be a banner image, or the like. Next, the control unit 300 of the host terminal 100 transmits information about the offered advertisement to the content server 140 at operation 739.

Meanwhile, the operation of the host terminal 100 can be performed as shown in FIG. 5, and the calculation of advertising expenses at the content server 140 can be performed as shown in FIG. 6.

The content server 140 that offers an advertisement to the host terminal 100 calculates and accumulates individual advertising expenses for the host terminal 100 at operation 741. At this operation, the content server 140 can be aware that there is at least one sharer terminal 110 connected to the host terminal 100 and also an advertisement is being displayed on two or more terminals, namely, the host terminal 100 and at least one connected sharer terminal 110. In this case, advertising expenses can be calculated individually and differently according to device information of the respective terminals. Therefore, at operation 741, the content server 140 can calculate and add up individual advertising expenses for each of the host terminal 100 and the connected sharer terminal(s) 110.

As fully discussed hereinbefore, in a system for providing a multi-screen service, a plurality of similar and/or different devices can share the same contents. In this case, advertising expenses of the same advertisement exposed to such devices may be calculated individually and added up. For example, in case a portable device such as a smart phone or a tablet PC is connected to a TV, a monitor, or any other large screen through a docking station, many people can watch simultaneously contents and advertisements being processed in the portable device. In this case, the method disclosed herein may calculate the whole advertising expenses for all of the host and sharer terminals. Namely, advertising effects exposed to many people may be applied to the calculation of advertising expenses.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for processing advertising expenses at a host terminal of a system that provides a multi-screen service, the method comprising:
receiving the advertisement from the server;
requesting device information regarding a sharer terminal when the sharer terminal is connected to the host terminal;
obtaining device information of the sharer terminal;
transmitting device information regarding the host terminal and the sharer terminal to the server;
transmitting the advertisement to the sharer terminal; and
upon a request for finishing a display of the advertisement, delivering the request to the server.

2. The method of claim 1, wherein the device information contains display sizes of the host terminal and the sharer terminal, and wherein the server determines the calculation methods of advertisement expenses, depending on the respective display size.

3. The method of claim 2, further comprising:
upon a request for disconnecting the sharer terminal, transmitting an instruction of disconnecting the sharer terminal, to the server.

4. The method of claim 3, further comprising:
based on a click on the displayed advertisement, transmitting information on a number of clicking the advertisement to the server.

5. The method of claim 2, further comprising a method for calculating an advertisement expense at the server of a system that provide the multi screen service,
wherein the method comprises:
obtaining device information on the host terminal and the at least one sharer terminal;
determining each calculation method for advertisement expenses for the host terminal and the at least one sharer terminal, based on device information; and
calculating each advertisement expense for the host terminal and at least one sharer terminal, according to the respective calculation method; and
obtaining a total advertisement expense for the multi-screen system by summing up each advertisement expense.

6. The method of claim 5,
wherein the calculating the advertising expenses comprises calculating the advertising expenses for the host terminal, based on exposure times and an exposure duration of the advertisement, and a number of clicking the advertisement, and
wherein the calculating the advertising expenses includes calculating the advertising expenses for the at least one sharer terminal, based on exposure times of the advertisement and the exposure duration of the advertisement.

7. The method of claim 6, wherein the exposure duration of the advertisement on the sharer terminal is a difference between a link connection time and a link disconnection time of the advertisement at the sharer terminal.

8. A host terminal for supporting a multi-screen service, the host terminal comprising:
a communication unit configured to:
transmit device information on the host terminal and a sharer terminal to a server; and
receive the advertisement from the server;
a short-range communication unit configured to establish a communication link with the sharer terminal; and
a control unit configured to:
obtain the device information from the sharer terminal;
transmit the device information regarding the sharer terminal to the server through the communication unit; and
transmit the advertisement to the sharer terminal through the short-range communication unit.

9. The device of claim 8, wherein the device information contains a display size, and wherein the server differently determines calculation criteria of advertising expenses depending on the display size.

10. The device of claim 9, wherein the short-range communication unit comprises:
a short-range wireless communication unit configured to communicate with a wireless sharer terminal; and
a wired communication unit configured to a wired sharer terminal.

11. The device of claim 10, wherein upon a request for disconnecting the sharer terminal, the control unit is further configured to:
control the short-range communication unit to remove the communication link with the sharer terminal, and
transmit disconnection information about the sharer terminal to the server through the communication unit.

12. The device of claim 11, wherein the control unit is further configured to, based on a click on the advertisement displayed on a display unit, transmit information on a number of clicking on the advertisement to the server through the communication unit.

13. The device of claim 11, further comprising the server for calculating an advertisement expenses;
wherein the server comprises:
a communication unit configured to:
receive device information on the host terminal and the at least one sharer terminal, from a host terminal; and
transmit an advertisement to the host terminal; and
a processor configured to:
determine calculation methods for each advertisement expense of the host terminal and the at least one sharer terminal, based on device information on the respective terminal;
calculate each advertisement expense for the host terminal and at least one sharer terminal, according to the respective calculation method; and
obtain a total advertisement expense for the multi-screen system by summing up each advertisement expense.

14. The device of claim 13,
wherein the processor is further configured to calculate the advertising expenses for the host terminal based on exposure times and an exposure duration of the advertisement, and a number of clicking the advertisement, and
wherein the processor is further configured to calculate the advertising expenses for the sharer terminal, based on exposure times and an exposure duration of the advertisement.

15. The device of claim 14, wherein the exposure duration of the advertisement on the sharer terminal is a difference between a link connection time and a disconnection time of the at least one sharer terminal.
